Europäisches Patentamt

European Patent Office

Office européen des brevets

(19)

(11) Veröffentlichungsnummer: **0 016 762**
**B1**

(12) # EUROPÄISCHE PATENTSCHRIFT

(45) Veröffentlichungstag der Patentschrift:
**12.05.82**

(51) Int. Cl.³: **H 02 M 1/14,** H 02 J 7/16,
G 05 F 1/10

(21) Anmeldenummer: **79900397.5**

(22) Anmeldetag: **27.03.79**

(86) Internationale Anmeldenummer:
**PCT/EP 79/00024**

(87) Internationale Veröffentlichungsnummer:
**WO 79/00878 (01.11.79 Gazette 79/22)**

(54) **SCHALTUNGSANORDNUNG ZUR GLÄTTUNG DER VON EINEM ELEKTRISCHEN GENERATOR ABGEGEBENEN SPANNUNG.**

(30) Priorität: **04.04.78 DE 2814424**

(43) Veröffentlichungstag der Anmeldung:
**15.10.80 Patentblatt 80/21**

(45) Bekanntmachung des Hinweises auf die Patenterteilung:
**12.05.82 Patentblatt 82/19**

(84) Benannte Vertragsstaaten:
**DE FR GB SE**

(56) Entgegenhaltungen:
**DE-A-1 936 481**
**FR-A-2 225 876**
**Electronics, volume 46, No. 23, 8 November 1973,**
**(McGraw-Hill, Inc. New York) R. Spencer**
**»Inexpensive power supply produces zero-**
**ripple output« see page 96**

(73) Patentinhaber: **ROBERT BOSCH GMBH, Postfach 50,**
**D-7000 Stuttgart 1 (DE)**

(72) Erfinder: **KUHN, Edgar, Aspergle 10, D-7016 Gerlingen**
**(DE)**

## Schaltungsanordnung zur Glättung der von einem elektrischen Generator abgegebenen Spannung

Die Erfindung geht aus von einer Schaltungsanordnung zur Glättung der Reglereingangsspannung eines elektrischen Generators nach der Gattung des Patentanspruchs 1.

Aus der FR-A 2 225 876 von Unelec ist eine Kompensationseinrichtung für einen durch einen Zweizylinder-Dieselmotor angetriebenen 50-Hz-Wechselstromgenerator bekannt, die der Gleichstrom-Erregung dieses Generators eine Kompensations-Wechselspannung überlagert, die in Gegenphase zu den 12,5-Hz-Wechselspannung-Amplitudenschwankungen, die bei einer Umdrehung des Motors durch die Dreh-Geschwindigkeitsverringerung während des Kompressionsvorganges und durch die Dreh-Geschwindigkeitserhöhung während des Expansionstaktes entstehen, entgegenwirkt, und zwar in der Weise, daß jeweils während des Kompressionsvorganges die Erregung erhöht und während des Expansionstaktes des Dieselmotors verringert wird.

Im Gegensatz hierzu ist bei einem zur Bordnetzversorgung eines Kraftfahrzeuges mit über Gleichrichter gewonnenen Gleichstrom trotz der an die Gleichrichter angelegten Starterbatterie eine der Ausgangsgleichspannung überlagerte Halbwellen-Wechselspannung feststellbar, welche beispielsweise bei einer elektronisch gesteuerten Zündeinrichtung zu unkontrollierten Verschiebungen des Zündzeitpunktes führen kann.

Der Erfindung liegt die Aufgabe zugrunde, den über der Gleichspannung am Gleichrichterausgang, an welcher der Regler des Generators angeschlossen ist, auftretenden Halbwellenwechselspannungen durch gegenphasige Erhöhung und Erniedrigung der Generatorerregung entgegenzuwirken.

Die erfindungsgemäße Schaltungsanordnung mit den kennzeichnenden Merkmalen des Patentanspruchs hat den Vorteil, daß es gelingt, die Welligkeit der vom Generator hinter den Gleichrichtern abgegebenen und dem Regler zugeführten Gleichspannung völlig zu beseitigen. Dies läßt sich mit einem Kondensator mit relativ kleiner Kapazität erzielen, was vor allem für hohe Temperaturen kostengünstiger ist. Trotz dieser Vereinfachung ergeben sich sehr gute Regeleigenschaften. Die Reduzierung der Kapazität des verwendeten Kondensators ist dabei besonders günstig für den Aufbau von Reglern, die in der sogenannten Hybrid- oder IC-Technik (integrated circuit) hergestellt werden.

Ein Ausführungsbeispiel ist in der Zeichnung dargestellt und wird in der nachfolgenden Beschreibung näher erläutert. Es zeigt

Fig. 1 eine mögliche Ausführungsform der erfindungsgemäßen Schaltungsanordnung in Zuordnung zu einem Drehstromgenerator, der über getrennte Erregerdioden verfügt und

Fig. 2 in Form eines Diagramms den Spannungsverlauf und damit die Wirkungsweise an verschiedenen Punkten der Schaltung.

Bevor im einzelnen auf die Erfindung eingegangen wird, sei darauf hingewiesen, daß diese sich zur Anwendung bei beliebigen Reglertypen und Generatorsystemen, insbesondere Drehstromgeneratoren, eignet, denn der Grundgedanke der Erfindung besteht darin, daß zur Glättung der Generatorspannung — speziell bei Drehstromgeneratoren für Kraftfahrzeuge — eine gegenphasige Aufschaltung erfolgt, die die Welligkeit praktisch zu Null reduziert.

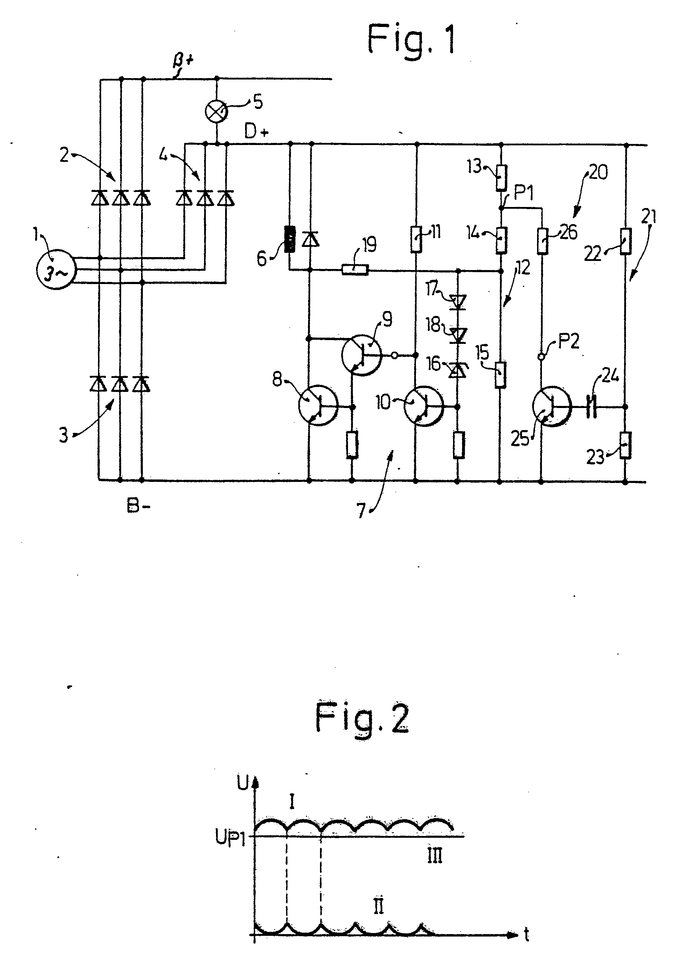

In der Darstellung der Fig. 1 ist der Generator als Drehstromgenerator mit drei Ständerwicklungen ausgebildet und mit 1 bezeichnet. Seine drei herausgeführten Spannungsanschlüsse sind jeweils mit den Anoden sogenannter Plusdioden 2 und mit den Kathoden sogenannter Minusdioden 3 verbunden, deren zusammengefaßten Anoden die Minusschiene oder Masse des Systems darstellen. Es ergibt sich so die Stromversorgung eines Bordnetzes, dessen Anschlüsse mit den in Deutschland üblichen Bezeichnungen B+ und B− bezeichnet sind, wie im übrigen auch noch einige andere Anschlüsse mit entsprechend gebräuchlichen Bezeichnungen beibehalten sind.

Ergänzend zu dieser Brückengleichrichteranordnung 2, 3 verfügt der Drehstromgenerator über drei gesonderte sogenannte Erregerdioden 4, die gleichfalls mit den Anschlüssen der Ständerwicklungen verbunden sind, und deren zusammengefaßten Kathoden den Anschluß D+ bilden. Wie üblich ist die Klemme D+ mit der Klemme B+ über die Ladeanzeigelampe 5 verbunden, über die bei Generatoranlauf auch ein Vorerregungsstrom von der ebenfalls mit B+ verbundenen Batterie fließen kann.

Die Erregerwicklung ist in Fig. 1 mit 6 bezeichnet; sie liegt am Anschluß D+ und ist über die Hauptschaltstrecke des allgemein mit 7 bezeichneten Reglers mit Fahrzeugmasse oder B− verbunden. Bei dem dargestellten Ausführungsbeispiel besteht der Regler aus zwei eine Art Darlingtonschaltung bildenden Haupttransistoren 8 und 9, deren Kollektoremitterstrecken die Hauptsteuerstrecke des Reglers 7 bilden und wobei die Basis des Transistors 9 zur Steuerung des Darlington 8, 9 mit dem Kollektor eines weiteren Transistors 10 verbunden ist, dessen Emitter unmittelbar an Masse B− und dessen Kollektor über einen weiteren Widerstand 11 mit der Plusschiene D+ verbunden ist. Im Basiskreis des Transistors 10, der das Reglerverhalten steuert, befindet sich ein erster Spannungsteiler 12 aus den Widerständen 13, 14 und 15, wobei der Verbindungspunkt der Widerstände 14 und 15 über mindestens eine Zenerdiode 16 mit der Basis des Transistors 10 verbunden ist, gegebenenfalls noch über weitere in Flußrichtung geschaltete Dioden 17 und 18. Die Wirkungsweise eines solchen (Transistor)Reglers 7 ist dann so, daß von den Erregerdioden über D+ und die Emitterkollektorstrecken der Transistoren 8 und 9 und damit durch die Erregerwicklung 6 der volle Erregerstrom fließt, und zwar so lange, wie der Transistor 10 gesperrt ist, was stets dann der Fall ist, wenn die Generatorspannung bzw. die an D+ abfallende Generatorspannung den Sollwert, der durch die Zenerdiode 16 vorgegeben wird, noch nicht erreicht hat. Erreicht aber die Spannung am Eingangsspannungsteiler 12 des Reglers 7 die Sollwertspannung, dann bricht die Zenerdiode 16 durch, der Transistor 10 wird leitend und der Darlington 8, 9 sperrt, so daß kein Erregerstrom mehr fließen kann. Dadurch fällt die Spannung wieder unter den Sollwert ab und die Hauptsteuerstrecke des Reglers wird wieder leitend geschaltet. Der Widerstand 19 bringt in dieses sich in schneller Folge wiederholende Spiel durch Rückkopplung ein Hystereseverhalten hinein. Insgesamt kann sich eine vergleichsweise sehr genaue geregelte Spannung ergeben, wenn die Welligkeit der vom Generator abgegebenen Spannung sich hier nicht nachteilig auswirken würde, weil bezüglich der Batterie der arithmetische Mittelwert der Generatorspannung konstant geregelt werden muß.

Zur Lösung der Aufgabe, die Generatorspannung zur Erzielung einer konstanten Generatorspannung unabhängig von Belastung und Drehzahl des Generators zu glätten, verfügt daher die Schaltung der Fig. 1 über eine dem Reglereingang, d. h. hier seinem Eingangsspannungsteiler 12 zugeordnete Kompensationsschaltung 20, die am Punkt P 1 mit dem Reglereingang verbunden ist. Die Kompensationsschaltung 20 ist so ausgebildet, daß sie die an der Klemme D+ abgegebene Generatorspannung erfaßt bzw. genauer gesagt, die Kompensationsschaltung erfaßt den Welligkeitsgehalt der Generatorspannung und schaltet den durch diese Welligkeit gegebenen Wechselspannungsanteil der Generatorspannung in Gegenphase auf den Reglereingang auf, so daß sich nunmehr am Schaltungspunkt P1 eine Reglereingangsspannung ergibt, die von Welligkeit völlig frei ist. Das Diagramm der Fig. 2 zeigt, was gemeint ist; der Kurvenverlauf I zeigt die mit der üblichen Welligkeit behaftete, gleichgerichtete Generatorspannung, während der Kurvenverlauf II die Spannung darstellt, die als Ausgangsspannung der Kompensationsschaltung 20 von dieser gebildet wird und beispielsweise am Schaltungspunkt P2 entsteht. Durch die Anschaltung dieser bezüglich der Welligkeit in Gegenphase liegenden Spannung entsprechend II ergibt sich dann am Punkte P1 die reine Gleichspannung $U_{P1}$ entsprechend Kurvenverlauf III der Fig. 2, also eine Gleichspannung, die keinerlei Welligkeit mehr aufweist. Dadurch wird auch dem Reglereingang eine Gleichspannung zugeführt, die ein von der Welligkeit der Generatorspannung unabhängiges Reagieren des Reglers 7 ermöglicht, so daß die Generatorspannung optimal geglättet und von der Belastung und Drehzahl des Generators unabhängig auf einem gewünschten konstanten Wert gehalten werden kann.

Die Kompensationsschaltung 20 besteht im einzelnen aus einer Teilerschaltung 21, gebildet von zwei Widerständen 22, 23, deren Abgriff über einen Kondensator 24 vergleichsweise geringer Kapazität mit dem Steuereingang eines aktiven Halbleiterschaltelements, nämlich des Transistors 25 verbunden ist. Der Kondensator 24 führt den Wechselspannungsanteil der an D+ anliegenden Generatorspannung dem Transistor 25 zu, der an seinem Kollektor eine gegenphasige Welligkeit entsprechend Kurvenverlauf II der Fig. 2 ausgebildet und über einen weiteren Widerstand 26 dem Schaltungspunkt P1 zuführt. An diesem ergibt sich dann durch Kompensation eine Gleichspannung, deren Wechselspannungsanteil praktisch auf Null reduziert ist.

Im übrigen ist es möglich, die Kompensationsschaltung einerseits und die Zenerdiode 16 andererseits eventuell über Dioden 17 und 18 an den gleichen Schaltungspunkt der Teilerschaltung 12 anzuschließen, d. h. mit anderen Worten, daß der Widerstand 14 auch entfallen kann.

## Patentansprüche

1. Schaltungsanordnung zur Glättung der Reglereingangsspannung eines elektrischen Generators (1), insbesondere eines Drehstromgenerators für die Bordnetzversorgung von Kraftfahrzeugen, Schiffen und dergleichen, mit einem Regler (7), dessen Hauptsteuerstrecke in Reihe mit der Erregerwicklung (6) geschaltet und an dessen Eingang eine mindestens ein aktives Halbleiterschaltelement (Transistor 25) umfassende Kompensationseinrichtung (20) angeschlossen ist, die dem Regler (7) eine in Gegenphase zur Welligkeit der vom Generator (1) über Gleichrichter (2, 3, 4) gelieferten Gleichspannung (I) liegende Kompensationsspannung (II) zuführt, dadurch gekennzeichnet, daß die Kompensationseinrichtung (20) an einen Eingangsspannungteiler (12) des Reglers (7) geschaltet ist und selbst über einen Spannungsteiler (21) verfügt, der den Welligkeitsgehalt der Generatorspannung erfaßt und über einen Kondensator (24) der Steuerelektrode eines Transistors (25) zuführt, dessen Kollektor mit dem Eingangsspannungsteiler (12) des Reglers (7) verbunden ist.

2. Schaltungsanordnung nach Anspruch 1, dadurch gekennzeichnet, daß der Eingangsspannungsteiler (12) des Reglers (7) aus drei Widerständen (13, 14, 15) besteht, daß an einen Verbindungspunkt der Widerstände (14, 15) eine Zenerdiode (16) angeschlossen ist, die mit der Basis eines Steuertransistors (10) verbunden ist, der dann, wenn die Generatoristspannung die von der Zenerdiode (16) vorgegebene Sollwertspannung überschreitet, durch Leitendwerden den Darlingtontransistor (8, 9) des Reglers (7) und damit die Erregerwicklung stromlos schaltet.

3. Schaltungsanordnung nach einem der Ansprüche 1 oder 2, dadurch gekennzeichnet, daß der Transistor (25) der Kompensationseinrichtung (20) mit seinem Kollektor über einen Widerstand (26) mit einem anderen Verbindungspunkt der Widerstände (13, 14) des Eingangsspannungsteilers (12) des Reglers (7) verbunden ist.

**Claims**

1. A circuit arrangement for smoothing the regulator input voltage of an electric generator (1), especially a three-phase generator for the supply of the electrical system of motor vehicles, ships or the like, comprising a regulator (7), the main control line of which is connected in series with the energising winding (6) and to the input to which is connected a compensating device (20) comprising at least one active semiconductor switching element (transistor 25), which supplies to the regulator (7), a compensating voltage (II) arranged in opposite phase to the pulsation of the D. C. voltage (I) delivered by the generator (1) through rectifiers (2, 3, 4), characterised in that, the compensating device (20) is connected to an input voltage divider (12) of the regulator (7) and is controlled automatically by a voltage divider (21) which detects the pulsating component of the generator voltage and transmits it through a capacitor (24) to the control electrode of a transistor (25), the collector of which is connected to the input voltage divider (12) of the regulator (7).

2. A circuit arrangement according to claim 1, characterised in that, the input voltage divider (12) of the regulator (7) consists of three resistors (13, 14, 15), that a zener diode (16) is connected to the junction of the resistors (14, 15), which diode is connected to the base of a control transistor (10) which, on becoming conductive, switches the darlington transistors (8, 9) of the regulator (7) and with them the energising winding, to the no current condition, when the actual generator voltage exceeds the desired voltage value predetermined by the zener diode (16).

3. A circuit arrangement according to one of claims 1 or 2, characterised in that, the transistor (25) of the compensating device (20) is connected by its collector through a resistor (26) to another junction of the resistors (13, 14) of the input voltage divider (12) of the regulator (7).

**Revendications**

1. Dispositif de circuit pour le lissage de la tension d'entrée du régulateur d'un générateur électrique (1), notamment d'un alternateur pour l'alimentation du réseau de bord véhicules automobiles, et analogues, avec un régulateur (7) dont la section de commande principale est branchée en série avec le bobinage excitateur (6) et à l'entrée duquel est raccordée une installation de compensation (20) comprenant au moins un élément actif de commutation à semi-conducteur (transistor 25), cette installation appliquant au régulateur (7) une tension de compensation (II) se trouvant en opposition de phase par rapport à l'ondulation de la tension continue (I) délivrée par l'intermédiaire d'un redresseur (2, 3, 4) à partir du générateur (1), dispositif caractérisé en ce que l'installation de compensation (20) est branchée sur un diviseur de tension d'entrée (12) du régulateur (7) et comporte elle-même un diviseur de tension (21) détectant la structure ondulatoire de la tension du générateur et l'appliquant par l'intermédiaire d'un condensateur (24) à l'électrode de commande d'un transistor (25) dont le collecteur est relié au diviseur de tension d'entrée (12) du régulateur (7).

2. Dispositif de circuit selon la revendication 1, caractérisé en ce que le répartiteur de tension d'entrée (12) du régulateur (7) est constitué de trois résistances (13, 14, 15), une diode de Zener (16) étant raccordée à un point de jonction des résistances (14, 15), cette diode étant reliée à la base d'un transistor de commande (10), qui, lorsque la tension réelle du générateur dépasse la tension de consigne prédéterminée par la diode de Zener (16), commute en le rendant conducteur le transistor Darlington (8, 9) du régulateur (7) et commute ainsi le bobinage d'excitation en l'absence de courant.

3. Dispositif de circuit selon l'une des revendications 1 ou 2, caractérisé en ce que le transistor (25) de l'installation de compensation (20) est relié par son collecteur et par l'intermédiaire d'une résistance (26) avec un autre point de jonction des résistances (13, 14) du diviseur de tension d'entrée (12) du régulateur (7).

# Fig. 1

# Fig. 2